(19) Europäisches Patentamt
European Patent Office
Office européen des brevets

(11) **EP 1 087 229 B1**

(12) **EUROPÄISCHE PATENTSCHRIFT**

(45) Veröffentlichungstag und Bekanntmachung des Hinweises auf die Patenterteilung:
**08.07.2009 Patentblatt 2009/28**

(51) Int Cl.:
***G01N 29/22*** *(2006.01)*

(21) Anmeldenummer: **00119202.0**

(22) Anmeldetag: **05.09.2000**

(54) **Verfahren und Vorrichtung zur Detektion eines Fehlers mittels Ultraschall**

Method and device for ultrasonic flaw detection

Méthode et appareil pour la détection des défauts par ultrasons

(84) Benannte Vertragsstaaten:
**AT BE CH CY DE DK ES FI FR GB GR IE IT LI LU MC NL PT SE**

(30) Priorität: **09.09.1999 DE 19943215**

(43) Veröffentlichungstag der Anmeldung:
**28.03.2001 Patentblatt 2001/13**

(73) Patentinhaber:
• **intelligeNDT Systems & Services GmbH 91052 Erlangen (DE)**
• **DB Fernverkehr AG 60326 Frankfurt (DE)**

(72) Erfinder:
• **Erhard,Anton,Dr. 12307 Berlin (DE)**
• **Hintze,Hartmut 14715 Milow (DE)**
• **Meier,Rainer,Dip.-Ing. 91058 Erlangen (DE)**
• **Schulz,Eduard 12277 Berlin (DE)**
• **Wüstenberg,Hermann,Prof.Dr. 14163 Berlin (DE)**

(74) Vertreter: **Mörtel & Höfner Patentanwälte Äussere Sulzbacher Strasse 159/161 90491 Nürnberg (DE)**

(56) Entgegenhaltungen:
WO-A-90/13814     US-A- 5 654 510

• **SCHRAMM RAYMOND E: "Ultrasonic measurement of stress in railroad wheels" REVIEW OF SCIENTIFIC INSTRUMENTS, AMERICAN INSTITUTE OF PHYSICS, US, Bd. 70, Nr. 2, Februar 1999 (1999-02), Seiten 1468-1472, XP012037295 ISSN: 0034-6748**

**Beschreibung**

Die Erfindung liegt auf dem Gebiet der zerstörungsfreien Werkstoffprüfung.

Die Erfindung betrifft ein Verfahren zur Detektion eines Fehlers, insbesondere eines Risses, in einem Eisenbahnrad, wobei an der Lauffläche eines Eisenbahnrads, eine Ultraschallwelle mittels eines Ultraschallsenders im Prüfling erzeugt wird, wie im Oberbegriff des Anspruchs 1 definiert.

Die Erfindung bezieht sich außerdem auf eine Vorrichtung zur Durchführung des Verfahrens, gemäß Oberbegriff des Anspruchs 13.

Aus der EP 0 704 700 A1 ist ein Ultraschallwandler zur Prüfung von Eisenbahnrädern bekannt, mit dem in Umfangsrichtung entlang der Lauffläche umlaufende Ultraschallimpulse einkoppelbar sind. Damit ist nur ein oberflächennaher Bereich des Eisenbahnrads abtastbar.

Zur Ultraschallprüfung von Scheiben oder Platten wird in den meisten Fällen durch eine Flachseite der Scheibe bzw. Platte Ultraschall eingekoppelt. Die Einschallung durch den Radkranz eines Eisenbahnrads ist beispielsweise in AT 291 632 beschrieben.

Bei Prüflingen mit komplexer Gestalt kann es statt dessen erforderlich sein, Ultraschall durch eine Schmalseite oder Mantelfläche des Prüflings einzuschallen, z.B. falls sich bei einem kreisscheibenförmigen Prüfling die erwarteten Risse in Umfangsrichtung erstrecken. Die Schmalseite oder Mantelfläche eines scheiben- oder plattenartigen Prüflings hat eine Dicke (Höhe), die deutlich geringer ist als die Breiten- und Längsausdehnung oder der Durchmesser der Scheibe oder Platte. Um bei einer derartigen Einschallung den Prüfling dennoch in ganzem Volumen abtasten zu können, d.h. um eine große Prüftiefe (in Richtung der genannten Breiten- oder Längsausdehnung) zu erreichen, ist es erforderlich, senkrecht durch die Schmalseite des Prüflings einzuschallen oder zumindest bei sehr kleinen Einschallwinkeln zu arbeiten.

Aus der WO 90/13814 ist ein Verfahren zur Ultraschallprüfung von Eisenbahnrädern bekannt, bei dem Ultraschall durch die Lauffläche eingeschallt wird. Dabei wird sowohl ein Ultraschallwandler zur Senkrechteinschallung (Einschallwinkel 0°) als auch ein Ultraschallwandler für einen Einschallwinkel von 70° verwendet. Die Senkrechteinschallung dient dabei allein der Kalibrierung.

Der Erfindung liegt die Aufgabe zugrunde, ein Verfahren und eine Vorrichtung zur Detektion eines Fehlers in einem Eisenbahnrad anzugeben, mit Hilfe derer bei Einschallung durch die Lauffläche eine zuverlässige Prüfung auf Fehler oder Risse möglich ist.

Die verfahrensbezogene Aufgabe wird bezogen auf ein Verfahren der eingangs genannten Art gemäß der Erfindung durch die Kennzeichnenden Merkmale der Ansprüche 1 und 13 gelöst

Um eine hohe Meßtiefe zu erreichen, könnte in den Prüfling eine longitudinal polarisierte (schwingende) Ultraschallwelle (Longitudinalwelle) unter 0° eingeschallt werden. Um das gesamte Volumen des Prüflings abtasten zu können, wäre dabei zwangsläufig ein streifendes Auftreffen der Longitudinalwelle längs der Flachseite (z.B. Scheibenoberseite) im Prüfling erforderlich. Ein derartiger streifender Einfall würde bewirken, daß längs des Schallwegs transversal polarisierte Wellen abgespalten werden, die durch das Prüflingsvolumen zur gegenüberliegenden Flachseite (z.B. Scheibenunterseite) laufen und von dort wieder reflektiert werden. Es entsteht eine zickzackartige Wellenausbreitung im Prüfling. Dadurch würde die Schallenergie stark und undefiniert geschwächt, so daß eine Amplitudenbewertung des Ultraschallechos nicht möglich wäre. Eine Laufwegauswertung könnte ebenfalls nicht durchgeführt werden, da nicht bekannt ist, ob ein Echo aus der eingeschallten Longitudinalwelle oder aus einer der abgespaltenen Transversalwellen resultiert.

Durch die Verwendung einer Transversalwelle ist bei dem Verfahren nach der Erfindung das beschriebene Problem der Wellenabspaltung weitestgehend unterbunden. Die im Prüfling erzeugte und detektierte Ultraschallwelle ist hierzu wenigstens teilweise oder mit einer Komponente parallel zur Flachseite polarisiert. Durch die Verwendung eines vom Ultraschallsender gesonderten Ultraschallempfängers ist erreicht, daß die Transversalwelle sicher und zuverlässig empfangbar ist.

Zur Erzielung einer umfassenden Raumabtastung im Prüfling wird die Ultraschallwelle (Schallbündel) vorzugsweise mit ausreichend großer Divergenz eingeschallt, daß es zu einem streifenden Auftreffen entlang der Flachseiten des Prüflings kommt.

Nach einer bevorzugten Ausgestaltung wird bei einem um eine Rotationsachse drehbaren Prüfling der Ultraschallsender relativ zum Prüfling kreisförmig um die Rotationsachse bewegt. Hierdurch wird die Raumabtastung in vorteilhafter Weise weiter verbessert, d.h. es werden Risse in noch mehr Positionen und Orientierungen detektierbar.

Der Ultraschallempfänger ist vom Ultraschallsender um einen Azimuthalwinkel beabstandet und wird in gleicher Weise wie der Ultraschallsender bewegt.

Nach einer besonders bevorzugten Ausgestaltung wird die polarisierte detektierte Ultraschallwelle durch Modenumwandlung bei einfallender Longitudinalwelle erzeugt, insbesondere durch Brechung an einer Grenzfläche des Prüflings. Dadurch ist es in sowohl einfacher als auch zuverlässiger Weise möglich, die Transversalwelle im Prüfling zu erzeugen.

Modenumwandlung tritt allgemein bei schräger Einschallung auf. Beispielsweise wird bei schräger Einschallung einer Longitudinalwelle, die von einem als Dickenschwinger ausgebildeten Ultraschallsender erzeugt wird, im Prüfling sowohl eine Longitudinalwelle als auch eine Transversalwelle angeregt. Bei Einfallwinkeln oberhalb des ersten kritischen Winkels verschwindet die Longitudinalwelle und es wird nur eine Transversalwelle angeregt.

Nach einer anderen bevorzugten Ausgestaltung weist der Einschallwinkel der Ultraschallwelle im Prüfling (Brechungswinkel) einen Wert auf, der größer als 10°, insbesondere größer als 15°, und kleiner als der zu dem ersten kritischen Winkel gehörige transversale Brechungswinkel des Materials ist, aus dem der Prüfling gefertigt ist.

Die Winkelwerte in dem genannten Bereich sind einerseits so groß, daß mit hinreichender Intensität durch Modenumwandlung eine Transversalwelle im Prüfling erzeugbar ist, und andererseits derart klein, daß eine ausreichend große Meßtiefe erreicht wird. Die Verwendung von Einschallwinkeln, die zu Einfallswinkeln gehören, die kleiner als der erste kritische Winkel des Materials sind, ist in der Ultraschallprüftechnik nicht üblich, da in diesem Bereich sowohl eine Longitudinalwelle als auch eine Transversalwelle bei der Modenumwandlung entsteht. Die Transversalwellen-Energie ist dabei im Verhältnis zur Longitudinalwellen-Energie klein, so daß im Echo die Longitudinalwelle dominiert. Bisher war man davon ausgegangen, daß deshalb eine gezielte Zuordnung der kleinen Transversalwellen-Echos zu einem bestimmten Fehlertyp nicht zuverlässig möglich ist. Es wurden deshalb bislang lediglich Einfallswinkel verwendet, die größer als der erste kritische Winkel des Materials sind.

Unter dem Einschallwinkel wird hierbei und im folgenden der Brechungswinkel im Material (Prüfling) verstanden. Der Einschallwinkel ist von dem Einfallwinkel zu unterscheiden, der außerhalb des Prüflings gemessen ist.

Insbesondere ist bei einem aus Stahl gefertigten Prüfling der Einschallwinkel kleiner als 33°.

Eine transversal polarisierte Welle im Prüfling könnte prinzipiell auch ohne Modenwandel durch direktes Einstrahlen von Transversalwellen erzeugt werden. Die Transversalwellen könnten dann z.B. mit einem Scherschwinger erzeugt werden. Nachteilig daran ist jedoch die Notwendigkeit eines sehr zähen Koppelmittels, das für eine automatisierte Prüfung weitgehend ungeeignet ist. Ohne Modenwandel ließen sich Transversalwellen im Prüfling auch elektromagnetisch erzeugen (Elektromagnetic Ultrasonic System, kurz: EMUS). Hierbei wird der Schall nicht im Wandler erzeugt, sondern durch Induktion im Prüfling selbst. Dabei haben der Abstand des EMUS-Wandlers von der Prüflingsoberfläche, die Leitfähigkeit und die Permeabilität des Prüflings wesentlichen Einfluß auf die Ultraschallamplitude. Für ausreichend gute Meßergebnisse sind EMUS-Wandler in der Praxis nur bei sehr ebenen Oberflächen mit darunterliegendem gleichförmigem Materialgefüge einsetzbar. Für verschleißbeeinflußte Oberflächen ist die EMUS-Technik deshalb weniger geeignet, insbesondere auch weil diese im Vergleich zur Piezotechnik einen geringeren Signal-Rausch-Abstand aufweist.

Nach einer äußerst bevorzugten Weiterbildung wird das Empfangssignal des Ultraschallempfängers nur innerhalb eines Zeitintervalls ausgewertet, das den Empfangszeitpunkt der Ultraschallwelle einschließt, der für den Abstand zwischen dem Ultraschallsender und dem Ultraschallempfänger und für den Einschallwinkel zu erwarten ist. Hierbei wird die Schallgeschwindigkeit im Material als bekannt vorausgesetzt, so daß aus dem genannten Abstand und dem genannten Einschallwinkel der Empfangszeitpunkt als Laufzeit berechenbar ist.

Die Breite des Zeitintervalls wird beispielsweise an die Divergenz der Schallbündel des Ultraschallsenders und des Ultraschallempfängers angepaßt, so daß jeder innerhalb des Überlapp-Bereichs der beiden Schallbündel befindliche Fehler zu einem Transversalwellen-Echo innerhalb des Zeitintervalls führt. Die Breite des Zeitintervalls wird außerdem derart klein gewählt, daß eine gleichzeitig neben der Transversalwelle angeregte Longitudinalwelle aufgrund deren größerer Schallgeschwindigkeit und deren zudem kürzeren Laufwegs zu einem Schallecho führt, welches außerhalb des Zeitintervalls liegt. Auf diese Weise sind die energiereichen Longitudinalwellen-Echos unterdrückbar, und die vergleichsweise energieärmere Transversalwelle ist besonders zuverlässig detektierbar.

Vorzugsweise wird die Ultraschallwelle vom Ultraschallempfänger bei einem zum Einschallwinkel der Ultraschallwelle im wesentlichen betragsgleichen Empfangswinkel detektiert (symmetrische Betriebsweise).

Zum Prüfen von Zonen unterschiedlicher Tiefe im Prüfling wird nach einer anderen vorzugsweisen Weiterbildung des Verfahrens der Einschallwinkel und der Empfangswinkel nacheinander auf unterschiedliche, relativ zueinander jeweils im wesentlichen betragsmäßig gleiche Werte eingestellt. Bei jedem dieser unterschiedlichen Winkelwerte kann das empfangene Schallsignal nur im Laufwegsbereich der Überschneidung der Sende- und Empfangsrichtcharakteristik betrachtet werden. Die Überschneidungsbereiche liegen dann in unterschiedlichen Tiefen unterhalb der Schmalseite des Prüflings. Insbesondere ist in der Schar der verwendeten Winkelwerte wenigstens ein Winkel enthalten, der größer als 10°, insbesondere größer als 15°, und kleiner als der zu dem ersten kritischen Winkel des Materials gehörige transversale Brechungswinkel ist. Mit diesem Winkel kann in besonders großer Tiefe geprüft werden. Mit anderen, außerhalb des genannten Intervalls liegenden Winkelwerten, können auch geringere Tiefen abgetastet werden.

Nacheinander unterschiedliche Einschall- und Empfangswinkel sind z.B. in einfacher Weise erzeugbar, falls der Ultraschallsender und der Ultraschallempfänger als Gruppenstrahler ausgebildet sind, und deren Sende- bzw. Empfangsrichtcharakteristik geschwenkt wird.

Zusätzlich oder alternativ hierzu kann zum Prüfen von Zonen unterschiedlicher Tiefe im Prüfling zusätzlich zu der aus dem Ultraschallsender und dem Ultraschallempfänger gebildeten ersten Wandlergruppe mindestens eine zweite Wandlergruppe verwendet werden, der zumindest ein Ultraschallwandler zugeordnet ist, der von dem Ultraschallsender und dem Ultraschallempfänger verschieden ist. Es sind also wenigstens drei Ultraschallwandler vorhanden. Der Sender oder der Empfänger der zweiten Wandlergruppe kann mit dem Ultraschallsender bzw. dem Ultraschallempfänger der ersten Wandlergruppe identisch sein. In dieser Ausgestaltung sind Zonen unterschiedlicher Tiefe im Prüfling auch ohne Verwendung eines Gruppenstrahlers abtastbar.

Gemäß einer ersten bevorzugten Variante ist

a) der Abstand zwischen dem Ultraschallempfänger und dem Ultraschallsender der zweiten Wandlergruppe gleich dem entsprechenden Abstand der ersten Wandlergruppe, und
b) der Einschallwinkel der zweiten Wandlergruppe ist von dem Einschallwinkel der ersten Wandlergruppe verschieden.

Beispielsweise ist wenigstens einer der Einschallwinkel der ersten oder der zweiten Wandlergruppe größer als 10°, insbesondere größer als 15°, und kleiner als der zu dem ersten kritischen Winkel des Materials gehörige transversale Brechungswinkel.

Nach einer zweiten bevorzugten Variante ist

a) der Einschallwinkel und/oder der Empfangswinkel der zweiten Wandlergruppe gleich dem entsprechenden Winkel der ersten Wandlergruppe, und
b) der Abstand zwischen dem Ultraschallempfänger und dem Ultraschallsender der zweiten Wandlergruppe ist von dem entsprechenden Abstand der ersten Wandlergruppe verschieden.

Beispielsweise ist der genannte Einschallwinkel und/oder der genannte Empfangswinkel größer als 10°, insbesondere größer als 15°, und kleiner als der zu dem ersten kritischen Winkel des Materials gehörige transversale Brechungswinkel.

Die vorrichtungsbezogene Aufgabe wird bezogen auf eine Vorrichtung der eingangs genannten Art gemäß der Erfindung gelöst durch einen auf dem Prüfkopfträger angeordneten Ultraschallempfänger zur Detektion der Ultraschallwelle, der von dem Ultraschallsender um einen Azimuthalwinkel beabstandet ist.

Die Vorrichtung nach der Erfindung ist insbesondere zur Durchführung des Verfahrens nach der Erfindung geeignet. Die hierzu genannten Vorteile gelten bezüglich der Vorrichtung analog.

Vorzugsweise weist der Prüfkopfträger eine an eine Mantelfläche des Prüflings, insbesondere an eine Lauffläche eines Eisenbahnrads, anlegbare gekrümmte Koppelfläche auf.

Nach einer besonders bevorzugten Ausgestaltung sind der Ultraschallsender und/oder der Ultraschallempfänger für einen Einschallwinkel bzw. einen Empfangswinkel im Prüfling hergerichtet, deren Betrag größer als 10° und kleiner als der zu dem ersten kritischen Winkel gehörige transversale Brechungswinkel des Materials ist, aus dem der Prüfling gefertigt ist.

Nach einer anderen besonders bevorzugten Ausgestaltung sind der Ultraschallsender und/oder der Ultraschallempfänger für einen Einschallwinkel bzw. einen Empfangswinkel im Prüfling hergerichtet, deren Betrag im Bereich von 10° bis 35°, insbesondere im Bereich von 15° bis 33°, liegt.

Bevorzugt ist der Ultraschallempfänger für einen zum Einschallwinkel des Ultraschallsenders im wesentlichen betragsgleichen Empfangswinkel hergerichtet.

Nach einer ebenfalls bevorzugten Ausgestaltung weist der Prüfkopfträger zusätzlich zu der aus dem Ultraschallsender und dem Ultraschallempfänger gebildeten ersten Wandlergruppe mindestens eine zweite Wandlergruppe auf, der zumindest ein Ultraschallwandler zugeordnet ist, der von dem Ultraschallsender und dem Ultraschallempfänger verschieden ist.

Gemäß einer ersten diesbezüglichen bevorzugten Variante ist

a) der Abstand zwischen dem Ultraschallempfänger und dem Ultraschallsender der zweiten Wandlergruppe gleich dem entsprechenden Abstand der ersten Wandlergruppe, und
b) der Einschallwinkel der zweiten Wandlergruppe ist von dem Einschallwinkel der ersten Wandlergruppe verschieden.

Einer zweiten bevorzugten Variante folgend ist

a) der Einschallwinkel und/oder der Empfangswinkel der zweiten Wandlergruppe gleich dem entsprechenden Winkel der ersten Wandlergruppe, und
b) der Abstand zwischen dem Ultraschallempfänger und dem Ultraschallsender der zweiten Wandlergruppe ist von dem entsprechenden Abstand der ersten Wandlergruppe verschieden.

Nach einer besonders bevorzugten Ausgestaltung ist der Ultraschallsender als Gruppenstrahler mit schwenkbarem Einschallwinkel und der Ultraschallempfänger als Gruppenstrahler mit schwenkbarem Empfangswinkel ausgebildet, wobei insbesondere die Gruppenstrahler derart ansteuerbar sind, daß der Empfangswinkel jeweils im wesentlichen betragsgleich zum Einschallwinkel ist.

Nach einer ganz besonders bevorzugten Weiterbildung weist die Vorrichtung eine Auswerteeinheit auf, mittels der ein Zeitintervall einstellbar ist, außerhalb dessen das Empfangssignal des Ultraschallempfängers unterdrückbar ist.

Vier Ausführungsbeispiele einer Vorrichtung nach der Erfindung werden anhand der Figuren 1 bis 5 näher erläutert. Die Figuren dienen auch der Erläuterung des Verfahrens nach der Erfindung. Es zeigen:

FIG 1     ein erstes Ausführungsbeispiel einer Vorrichtung nach der Erfindung mit Gruppenstrahlern,

FIG 2     eine Querschnittsdarstellung der Figur 1,

FIG 3     ein zweites Ausführungsbeispiel nach der Erfindung mit Ultraschallwandlern mit feststehender Einschall- bzw. Empfangsrichtung,

FIG 4     ein drittes Ausführungsbeispiel einer Vorrichtung nach der Erfindung mit Ultraschallwandlern mit feststehender Einschall- bzw. Empfangsrichtung und

FIG 5     ein viertes Ausführungsbeispiel nach der Erfindung mit Gruppenstrahlern.

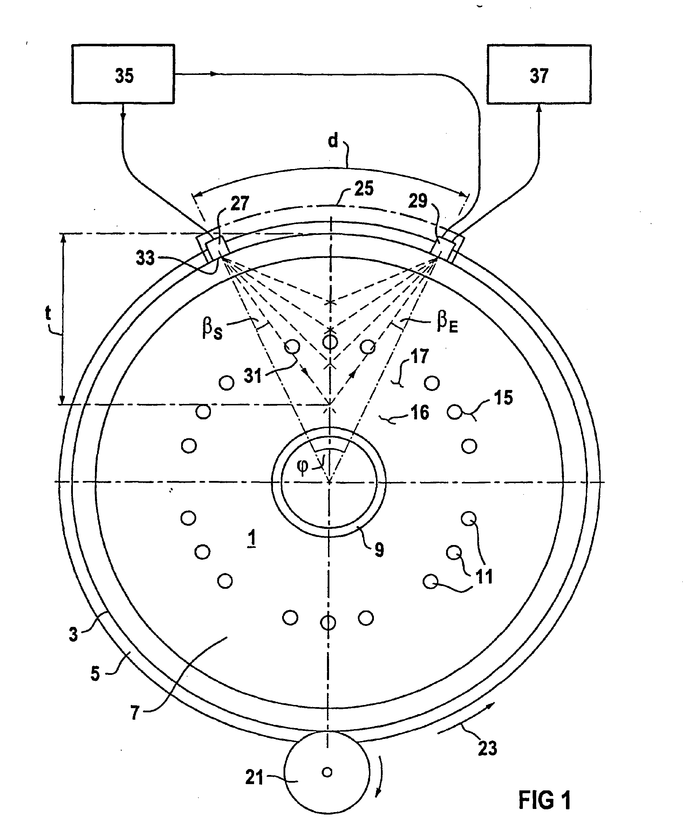

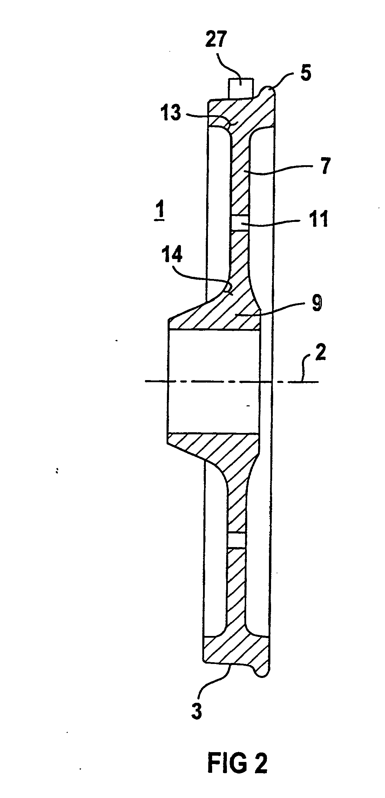

Die Figuren 1 und 2 zeigen einen um eine Rotationsachse 2 drehbaren Prüfling 1, bei dem es sich um ein Eisenbahnrad mit einem Raddurchmesser von etwa 920 mm handelt. Der Prüfling 1 weist eine Lauffläche 3, einen Spurkranz 5, eine Radscheibe 7 und eine Nabe 9 auf. Das Eisenbahnrad ist speziell ein Treibrad, weshalb durch die Radscheibe 7 mehrere Bohrungen 11 verlaufen. Die kreisförmige Innenseite und die kreisförmige Außenseite der Radscheibe 7 stellen Flachseiten des Prüflings 1 dar.

Insbesondere ausgehend von den genannten Bohrungen 11, aber auch im übrigen Bereich der Radscheibe 7 oder im Radkranz oder in der Nabe 9, können im Laufe der Lebensdauer des Eisenbahnrads Risse 13, 14, 15, 16 oder 17 entstehen. Im Gegensatz zu potentiellen Rissen, die von der Lauffläche 3 ausgehen, sind die Risse 13, 14, 15, 16, 17, auf deren Detektion die dargestellte Vorrichtung abzielt, im wesentlichen entlang eines Radumfangs erstreckt.

Zur Detektion der Risse 13, 14, 15, 16, 17 weist die Vorrichtung eine als Antriebsrad oder Rollenbock ausgestaltete Antriebseinrichtung 21 auf, mit Hilfe derer das Eisenbahnrad in Drehrichtung 23 angetrieben wird. Bestandteil der Vorrichtung ist ferner ein Prüfkopfträger 25, der bezüglich der Rotationsachse 2 des Eisenbahnrads ortsfest ist und beispielsweise mittels eines nicht explizit dargestellten Auslegers auf einer umgebenden ortsfesten Struktur abgestützt ist. Die Lauffläche 3 des Eisenbahnrads bewegt sich also unter dem Prüfkopf 25 hinweg.

Der Prüfkopfträger 25 weist einen Ultraschallsender 27 und einen Ultraschallempfänger 29 auf, die beide als Gruppenstrahler ausgebildet sind und voneinander um eine Bogenlänge d von ca. 400 mm, entsprechend einem Azimuthalwinkel $\varphi$ von ca. 50° beabstandet sind.

Sowohl der Ultraschallsender 27 als auch der Ultraschallempfänger 29 sind als piezoelektrischer Dickenschwinger ausgebildet. Das bedeutet, daß von dem Ultraschallsender 27 eine Longitudinalwelle abgestrahlt wird, die über einen nicht explizit dargestellten Koppelkörper oder Vorlaufkeil schräg durch die Lauffläche 3 in das Eisenbahnrad eingeschallt wird. Dabei findet an der Lauffläche 3 eine Brechung der Longitudinalwelle mit einem Modenwandel statt, d.h. im Prüfling entsteht eine gebrochene transversale Ultraschallwelle 31, die sich unter einem transversalen Brechungswinkel oder Einschallwinkel $\beta_S$ im Prüfling ausbreitet. Bei sehr kleinen Einfallswinkeln (gemessen außerhalb des Prüflings 1) breitet sich bei einfallender Longitudinalwelle im Prüfling sowohl die Transversalwelle als auch eine (nicht dargestellte) Longitudinalwelle aus.

Diese Koexistenz von Transversal- und Longitudinalwelle gibt es bis hin zu dem sogenannten ersten kritischen Winkel des Materials, aus dem der Prüfling 1 gefertigt ist. Der erste kritische Winkel beträgt bei Wasser als Ankoppelmedium und für einen Prüfling 1 aus Stahl etwa 14°. Für eine Grenzfläche Plexiglas/Stahl beträgt der erste kritische Winkel ca. 26°.

Der zu diesem ersten kritischen Winkel gehörige transversale Brechungswinkel beträgt in Stahl etwa 33°. Bei größeren Winkeln verschwindet die Longitudinalwelle im Prüfling 1 infolge auftretender Totalreflexion. Im Bereich zwischen dem ersten kritischen Winkel und dem zweiten kritischen Winkel des Materials existiert im Prüfling 1 deshalb nur eine Transversalwelle. Oberhalb des zweiten kritischen Winkels unterliegt auch die Transversalwelle der Totalreflexion, und es breitet sich im Prüfling 1 keine Ultraschallwelle mehr aus.

Der Bereich zwischen dem ersten kritischen Winkel und dem zweiten kritischen Winkel war bislang der für die Prüfung mit Transversalwellen genutzte Bereich. Gemäß dem Verfahren nach der Erfindung werden aber auch transversale Einschallwinkel $\beta_S$ genutzt, die zu einem Einfallwinkel unterhalb des ersten kritischen Winkels gehören. In diesem Bereich breitet sich neben der Transversalwelle auch eine energiereichere Longitudinalwelle aus. Der Ultraschallempfänger 29 und der Ultraschallsender 27 sind für solche Winkel hergerichtet. Das bedeutet z.B., daß mittels eines gekeilten Koppelkörpers ein entsprechender (außerhalb des Prüflings gemessener) Einfallswinkel vorgegeben wird, indem der Keilwinkel in Abhängigkeit vom Material des Koppelkörpers (Plexiglas u.a.) gewählt wird.

Der Prüfkopfträger 25 weist eine an die Lauffläche 3 des Eisenbahnrads anlegbar gekrümmte Koppelfläche 33 auf.

Mittels einer Ansteuereinheit 35 wird der Empfangswinkel $\beta_E$ betragsgleich zum Einschallwinkel $\beta_S$ des Ultraschallsenders 27 eingestellt. Die beiden Winkel $\beta_E$, $\beta_S$ unterscheiden sich lediglich in ihrem Vorzeichen, d.h. die Schallrichtungen des Ultraschallsenders 27 und des Ultraschallempfängers 29 sind aufeinander zugerichtet. Bei der dargestellten Sende-Empfangstechnik findet eine Abtastung nur im Bereich der Überschneidung der Sende- und Empfangsrichtcharakteristik statt. Die Größe des Überschneidungsbereichs hängt von der Divergenz der Sende- und Empfangskeulen ab.

Durch den Azimuthalwinkel $\varphi$ oder den Abstand d einerseits sowie durch den Einschallwinkel $\beta_S$ andererseits ist eine Tiefe t definiert, in der der Schwerpunkt des Überschneidungsbereichs liegt, in dem bei einer bestimmten Winkeleinstellung abgetastet wird. Für diese Tiefe t gilt in etwa:

$$t \approx d/(2*\tan\beta_S)$$

Zum Prüfen von Zonen unterschiedlicher Tiefe t im Prüfling 1 wird der Einschallwinkel $\beta_S$ und der Empfangswinkel $\beta_E$ (=$\beta_S$) mit Hilfe der Ansteuereinheit 35 nacheinander auf unterschiedliche Werte eingestellt. Stellvertretend hierfür sind in Figur 1 insgesamt vier solcher Winkeleinstellungen dargestellt. Zumindest bei den kleineren Winkeleinstellungen, die notwendig sind, um bis tief in das Eisenbahnrad hinein, d.h. bis nahe an die Nabe 9 heran, eine Abtastung zu ermöglichen, breitet sich auch eine energiereichere Longitudinalwelle im Medium aus.

Zur Unterdrückung dieser Longitudinalwelle wird mittels einer Auswerteeinheit 37 das Empfangssignal des Ultraschallempfängers 29 nur innerhalb eines Zeitfensters ausgewertet, das den erwarteten Empfangszeitpunkt der jeweiligen Transversalwelle einschließt. Da die energiereichere Longitudinalwelle eine größere Schallgeschwindigkeit und zudem (wegen ihres größeren Brechungswinkels) bei der dargestellten V-artigen Prüftechnik einen kürzeren Laufweg als die jeweils dargestellte Transversalwelle hat, liegen die Longitudinalwellen-Echos außerhalb des mittels des Zeitfensters betrachteten Laufwegbereichs und stören damit nicht. Auf diese Weise können die - im Winkelbereich unterhalb des ersten kritischen Winkels - relativ energieärmeren Transversalwellen-Echos mit hoher Genauigkeit ausgewertet werden.

Figur 2 zeigt den Prüfling 1 in einer Querschnittsdarstellung. Die Divergenz des Ultraschallsenders 27 in der Zeichenebene ist derart gewählt, daß die einander gegenüberliegenden Außenflächen der Radscheibe 7 streifend abgetastet werden.

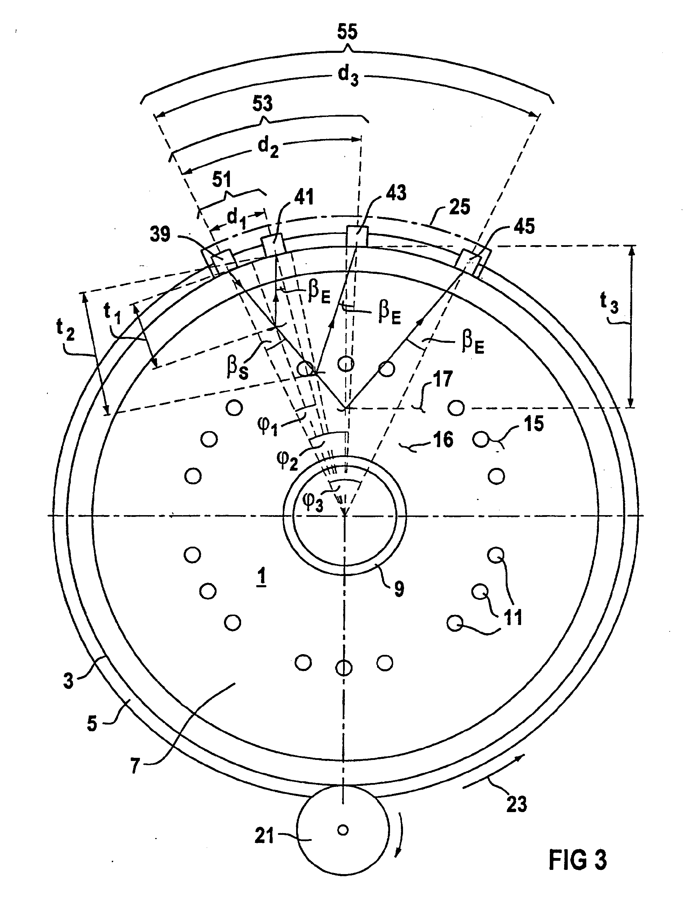

Zum Prüfen von Zonen unterschiedlicher Tiefe werden bei der in der Figur 3 dargestellten Vorrichtung nach der Erfindung in alternativer Weise neben genau einem Ultraschallsender 39 insgesamt drei Ultraschallempfänger 41, 43, 45 verwendet, die unterschiedliche Abstände $d_1$, $d_2$, $d_3$ zum Ultraschallsender 39 aufweisen. Auf diese Weise ergeben sich im gezeichneten Beispiel insgesamt drei voneinander unabhängige Prüfzonen oder Prüftiefen $t_1$, $t_2$, $t_3$. Alle vier dargestellten Ultraschallwandler 39, 41, 43, 45 sind mit feststehendem konstantem Einschallwinkel $\beta_S$ bzw. Empfangswinkel $\beta_E$ ausgebildet. Die vier Ultraschallwandler 39, 41, 43, 45 sind auf einem gemeinsamen Prüfkopfträger 25 angeordnet oder integriert.

Der Ultraschallsender 39 arbeitet zusammen mit dem ersten Ultraschallempfänger 41 eine erste Wandlergruppe 51 bildend in Sende-Empfangs-Technik. In gleicher Weise arbeitet der Ultraschallsender 39 zusammen mit dem zweiten Ultraschallempfänger 43 und dem dritten Ultraschallempfänger 45 eine zweite Wandlergruppe 53 bzw. eine dritte Wandlergruppe 55 bildend in Sende-Empfangs-Technik zusammen. Der Einschallwinkel $\beta_S$ und der Empfangswinkel $\beta_E$ sind bei allen drei Wandlergruppen 51, 53, 55 gleich groß. Dagegen ist der Abstand $d_1$, $d_2$, $d_3$ zwischen dem jeweiligen Sender und dem jeweiligen Empfänger der Wandlergruppen 51, 53, 55 verschieden.

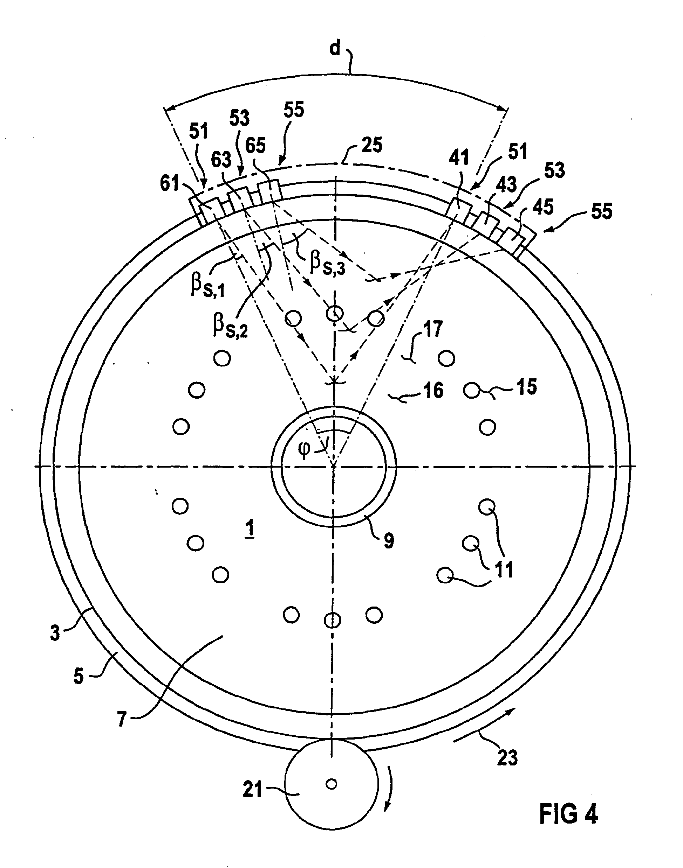

Bei dem in Figur 4 dargestellten dritten Ausführungsbeispiel sind alle auf dem Prüfkopfträger 25 angeordneten Ultraschallwandler 61, 63, 65, 41, 43, 45 wie bei dem Ausführungsbeispiel der Figur 3 als Wandler mit feststehender Empfangs- bzw. Senderichtung ausgebildet. Jeweils zwei der insgesamt sechs Ultraschallwandler arbeiten jeweils eine Wandlergruppe bildend in Sende-Empfangs-Technik zusammen:

> a) erste Wandlergruppe 51: erster Ultraschallsender 61, erster Ultraschallempfänger 41,
> b) zweite Wandlergruppe 53: zweiter Ultraschallsender 63, zweiter Ultraschallempfänger 43,
> c) dritte Wandlergruppe 55: dritter Ultraschallsender 65, dritter Ultraschallempfänger 45.

Bei allen drei Wandlergruppen 51, 53, 55 ist der Abstand d des jeweiligen Senders von jeweiligen Empfänger konstant. Statt dessen ist der Einschallwinkel $\beta_{S,1}$, $\beta_{S,2}$, $\beta_{S,3}$ bei jeder Wandlergruppe 51, 53, 55 verschieden. In der Praxis werden anstelle der stellvertretend gezeichneten drei Wandlergruppen 51, 53, 55 insgesamt fünf Wandlergruppen mit Einschallwinkeln von 15°, 22°, 29°, 36° und 43° verwendet.

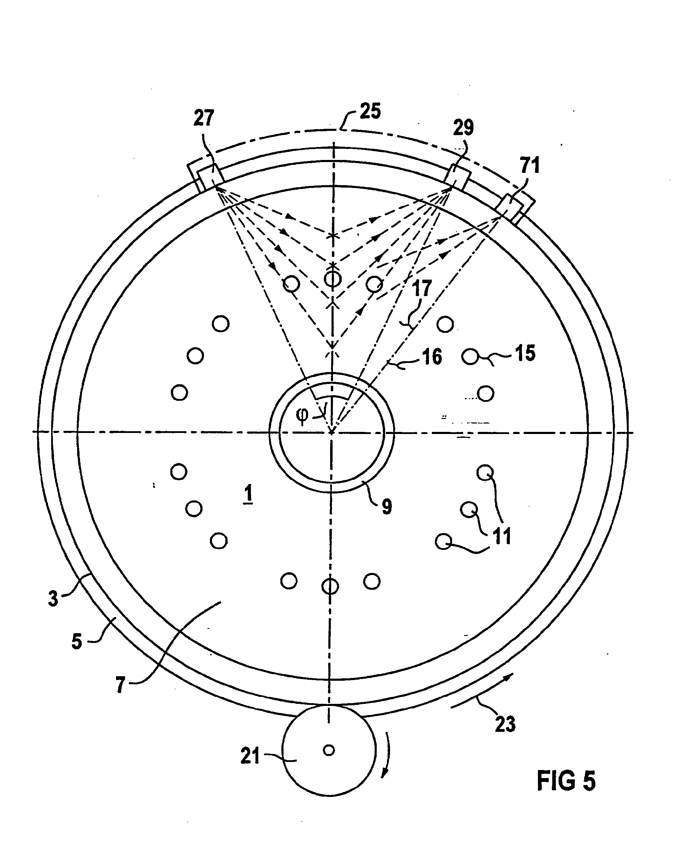

Bei dem dargestellten Eisenbahnrad wird ein Teil des Prüfvolumens durch die Bohrungen 11 abgeschattet. Zur Vermeidung solcher nicht abgetasteter Schattenbereiche ist bei dem in Figur 5 dargestellten vierten Ausführungsbeispiel zusätzlich zu dem in Figur 1 dargestellten Ultraschallsender 27 und Ultraschallempfänger 29 ein weiterer Ultraschallwandler 71 auf dem Prüfkopfträger 25 angeordnet, der ebenfalls als Gruppenstrahler ausgebildet ist. Der weitere Ultraschallwandler 71 kann entweder als Sender oder als Empfänger fungieren. Er ist von dem Ultraschallsender 27 bzw. von dem Ultraschallempfänger 29 um ca. 100 mm beabstandet. Der weitere Ultraschallwandler 71 ist bevorzugt auf die gleiche Meßtiefe eingestellt.

Weitere Ultraschallwandler zur Vermeidung nicht abgepaßter Schattenbereiche können auch bei den in den Figuren 3 und 4 dargestellten Ausführungsbeispielen vorgesehen sein.

Bei der Prüfung der Radscheibe 7 von der Lauffläche 3 aus ist es aufgrund des axialen Laufflächenprofils ratsam, nur schmale Ultraschallprüfköpfe mit einer Schwingerbreite von z.B. 8 mm zu verwenden. Um im Bereich kleiner Einschallwinkel der Transversalwelle das Ultraschallsignal zu verbessern, ist es zweckmäßig, die aktive Schwinger- oder Wandlerfläche zu vergrößern, d.h. die Ultraschallwandler bei gleicher Breite länger zu bauen (z.B. 16 mm lang). Dadurch wird das Schallbündel in der Zeichenebene der Figuren 3 und 4 schmäler. Bei diesen Ausführungsbeispielen mit Ultraschallwandlern mit feststehenden Richtcharakteristiken kann dies zusätzliche Wandlergruppen oder Wandlerpaare erforderlich machen, um den zu prüfenden Bereich voll abzudekken. In diesem Fall ist die Vorrichtung gemäß dem Ausführungsbeispiel der Figur 1, bei der Gruppenstrahler mit schwenkbarer Richtcharakteristik zum Einsatz kommen, besonders vorteilhaft.

Der Einschallwinkel $\beta_S$ bzw. $\beta_{S,1}$, $\beta_{S,2}$, $\beta_{S,3}$ ist zu kleinen Winkeln hin prinzipiell nicht begrenzt, jedoch wird die in die Transversalwelle modengewandelte Energie immer kleiner. Der Einschallwinkel könnte aber auch z.B. nur 5° betragen.

## Patentansprüche

1. Verfahren zur Detektion eines Fehlers, insbesondere eines Risses (13,14,15,16,17), in einem Eisenbahnrad (1), wobei an der Lauffläche (3) des Eisenbahnrads (1), eine Ultraschallwelle (31) mittels eines Ultraschallsenders (27;39;61,63,65) im Eisenbahnrad (1) erzeugt und zur Detektion der Ultraschallwelle (31) ein vom Ultraschallsender (27;39;61,63,65) um einen Azimuthalwinkel ($\varphi,\varphi_1,\varphi_2,\varphi_3$) beabstandeter Ultraschallempfänger (29;41,43,45) verwendet wird,

   **dadurch gekennzeichnet,**

   a) **dass** die Ultraschallwelle (31) schräg bezüglich der Lauffläche (3) eingeschallt wird und das Eisenbahnrad (1) V-förmig durchschallt,
   b) **dass** die detektierte Ultraschallwelle (31) transversal polarisiert und die Polarisationsrichtung parallel zu einer Flachseite des Eisenbahnrads (1) orientiert ist, und
   c) **dass** die Ultraschallwelle (31) nach Ablenkung, insbesondere Reflexion, an dem Fehler detektiert wird.

2. Verfahren nach Anspruch 1,
   **dadurch gekennzeichnet, dass**
   der Ultraschallsender (27;39;61,63,65) relativ zum Eisenbahnrad (1) kreisförmig um die Rotationsachse (2) des Eisenbahnrads (1) bewegt wird.

3. Verfahren nach Anspruch 2,
   **dadurch gekennzeichnet, dass** der Ultraschallempfänger (29;41,43,45) in gleicher Weise wie der Ultraschallsender (27;39;61,63,65) bewegt wird.

4. Verfahren nach einem der Ansprüche 1 bis 3,
   **dadurch gekennzeichnet, dass** die detektierte Ultraschallwelle (31) durch Modenumwandlung bei einfallender Longitudinalwelle erzeugt wird.

5. Verfahren nach einem der Ansprüche 1 bis 4,
   **dadurch gekennzeichnet, dass** der Einschallwinkel ($\beta_s;\beta_{s,i},\beta_{s,2}$) der Ultraschallwelle (31) im Eisenbahnrad (1) einen Wert aufweist, der größer als 10°, insbesondere größer als 15°, und kleiner als der zu dem ersten kritischen Winkel gehörige transversale Brechungswinkel des Materials ist, aus dem Eisenbahnrad (1) gefertigt ist.

6. Verfahren nach Anspruch 5,
   **dadurch gekennzeichnet, dass** der Einschallwinkel ($\beta_S$) kleiner als 33° ist.

7. Verfahren nach einem der Ansprüche 1 bis 6,
   **dadurch gekennzeichnet, dass** das Empfangssignal des Ultraschallempfängers (29;41,43,45) nur innerhalb eines Zeitintervalls ausgewertet wird, das den Empfangszeitpunkt der Ultraschallwelle (31) einschließt, der für den Azimuthalwinkel ($\varphi;\varphi_1,\varphi_2,\varphi_3$) zwischen dem Ultraschallsender (27;39;61,63,65) und dem Ultraschallempfänger (29;41,43,45) und für den Einschallwinkel ($\beta;\beta_{s,1},\beta_{s,2},\beta_{s,3}$) zu erwarten ist.

8. Verfahren nach einem der Ansprüche 1 bis 7,
   **dadurch gekennzeichnet, dass** die Ultraschallwelle vom Ultraschallempfänger (29;41,43,45) bei einem zum Einschallwinkel ($\beta_S$) der Ultraschallwelle im Wesentlichen betragsgleichen Empfangswinkel ($\beta_E$) detektiert wird.

9. Verfahren nach Anspruch 8,
   **dadurch gekennzeichnet, dass** zum Prüfen von Zonen unterschiedlicher Tiefe (t) im Eisenbahnrad (1) der Einschallwinkel ($\beta_S$) und der Empfangswinkel ($\beta_E$) nacheinander auf unterschiedliche, relativ zueinander jeweils im Wesentlichen betragsmäßig gleiche Werte eingestellt werden.

10. Verfahren nach einem der Ansprüche 1 bis 9,
    **dadurch gekennzeichnet, dass** zum Prüfen von Zonen unterschiedlicher Tiefe ($t;t_1,t_2,t_3$) im Eisenbahnrad (1) zusätzlich zu der aus dem Ultraschallsender (39;61) und dem Ultraschallempfänger (41) gebildeten ersten Wandlergruppe (51) mindestens eine zweite Wandlergruppe (53) verwendet wird, der zumindest ein Ultraschallwandler (43,45,63,65) zugeordnet ist, der von dem Ultraschallsender (39;61) und dem Ultraschallempfänger (41) verschieden ist.

11. Verfahren nach Anspruch 10,
    **dadurch gekennzeichnet,**

    a) **dass** der Azimuthalwinkel ($\varphi$) zwischen dem Ultraschallempfänger (43) und dem Ultraschallsender (39) der zweiten Wandlergruppe (53) gleich dem entsprechenden Azimuthalwinkel ($\varphi$) der ersten Wandlergruppe (51) ist, und
    b) **dass** der Einschallwinkel ($\beta_{s,2}$) der zweiten Wandlergruppe (53) von dem Einschallwinkel ($\beta_{s,1}$) der ersten Wandlergruppe (51) verschieden ist (Figur 4).

12. Verfahren nach Anspruch 10,
    **dadurch gekennzeichnet,**

    a) **dass** der Einschallwinkel ($\beta_s$) und/oder der Empfangswinkel ($\beta_E$) der zweiten Wandlergruppe (53) gleich dem entsprechenden Winkel ($\beta_s$) der ersten Wandlergruppe (51) ist, und
    b) **dass** der Azimuthalwinkel ($\varphi_2$) zwischen dem Ultraschallempfänger (43) und dem Ultraschallsender (39) der zweiten Wandlergruppe (53) von dem entsprechenden Azimuthalwinkel ($\varphi_1$) der ersten Wandlergruppe (51) verschieden ist (Figur 3).

13. Vorrichtung zur Detektion eines Fehlers, insbesondere eines Risses, in einem um eine Rotationsachse (2) drehbaren Eisenbahnrad (1), mit

    a) einem Prüfkopfträger (25), der einen Ultraschallsender (27;39;61,63,65) zum Einschallen einer Ultraschallwelle (31) durch die Lauffläche (3) in das Eisenbahnrad (1) trägt, und mit
    b) einem auf dem Prüfkopfträger (25) angeordneten Ultraschallempfänger (29;41,43,45) zur Detektion der Ultraschallwelle (31), der vom Ultraschallsender (27;39;61,63,65) um einen Azimuthalwinkel ($\varphi,\varphi_1,\varphi_2,\varphi_3$) beabstandet ist, insbesondere zur Durchführung des Verfahrens nach einem der Ansprüche 1 bis 12,
    **gekennzeichnet durch**
    eine Antriebseinrichtung (21) zum Bewegen des Ultraschallsenders (27;39;61,63,65) relativ zum Eisenbahnrad (1) und kreisförmig um die Rotationsachse (2), und **dadurch**, dass der Ultraschallsender zur schrägen Einschallung hergerichtet ist, und dass der Azimuthalwinkel ($\varphi,\varphi_1,\varphi_2,\varphi_3$) derart bemessen ist, dass das Eisenbahnrad (1) V-förmig durchschallbar ist.

14. Vorrichtung nach Anspruch 13,
    **dadurch gekennzeichnet, dass** der Prüfkopfträger (25) eine an die Lauffläche (3) des Eisenbahnrads (1), anlegbare gekrümmte Koppelfläche (33) aufweist.

15. Vorrichtung nach Anspruch 13 oder 14,
    **dadurch gekennzeichnet, dass** der Ultraschallsender (27;39;61,63,65) und/oder der Ultraschallempfänger (29;41,43,45) für einen Einschallwinkel ($\beta_s$) bzw. einen Empfangswinkel ($\beta_E$) im Eisenbahnrad (1) hergerichtet sind, deren Betrag größer als 10° und kleiner als der zu dem ersten kritischen Winkel gehörige transversale Brechungswinkel des Materials ist, aus dem das Eisenbahnrad (1) gefertigt ist.

16. Vorrichtung nach einem der Ansprüche 13 bis 15,
    **dadurch gekennzeichnet, dass** der Ultraschallsender (27;39;61,63,65) und/oder der Ultraschallempfänger (29;41,43,45) für einen Einschallwinkel ($\beta_s$) bzw. einen Empfangswinkel ($\beta_E$) im Eisenbahnrad (1) hergerichtet sind, deren Betrag im Bereich von 10° bis 35°, insbesondere im Bereich von 15° bis 33°, liegt.

17. Vorrichtung nach einem der Ansprüche 13 bis 16,
    **dadurch gekennzeichnet, dass** der Ultraschallempfänger (29;41,43,45) für einen zum Einschallwinkel ($\beta_s$) des Ultraschallsenders (27;39;61,63,65) im Wesentlichen betragsgleichen Empfangswinkel ($\beta_E$) hergerichtet ist.

18. Vorrichtung nach einem der Ansprüche 13 bis 17,
    **dadurch gekennzeichnet, dass** der Prüfkopfträger (25) zusätzlich zu der aus dem Ultraschallsender (39;61) und dem Ultraschallempfänger (41) gebildeten ersten Wandlergruppe (51) mindestens eine zweite Wandlergruppe (53) aufweist, der zumindest ein Ultraschallwandler (43,45,63,65) zugeordnet ist, der von dem Ultraschallsender (39;61) und dem Ultraschallempfänger (41) verschieden ist.

19. Vorrichtung nach Anspruch 18,
    **dadurch gekennzeichnet,**

    a) **dass** der Azimuthalwinkel ($\varphi$) zwischen dem Ultraschallempfänger (43) und dem Ultraschallsender (39) der zweiten Wandlergruppe (53) gleich dem entsprechenden Azimuthalwinkel ($\varphi$) der ersten Wandlergruppe (51) ist, und
    b) **dass** der Einschallwinkel ($\beta_{s,2}$) der zweiten Wandlergruppe (53) von dem Einschallwinkel ($\beta_{s,1}$) der ersten Wandlergruppe (51) verschieden ist (Figur 4).

20. Vorrichtung nach Anspruch 18,
    **dadurch gekennzeichnet,**

    a) **dass** der Einschallwinkel ($\beta_s$) und/oder der Empfangswinkel ($\beta_E$) der zweiten Wandlergruppe (53) gleich dem entsprechenden Winkel ($\beta_s$) der ersten Wandlergruppe (51) ist, und
    b) **dass** der Azimuthalwinkel ($\varphi_2$) zwischen dem Ultraschallempfänger (43) und dem Ultraschallsender (39) der zweiten Wandlergruppe (53) von dem entsprechenden Azimuthalwinkel ($\varphi_1$) der ersten Wandlergruppe (51) verschieden ist (Figur 3).

21. Vorrichtung nach einem der Ansprüche 13 bis 20,
    **dadurch gekennzeichnet, dass** der Ultraschallsender (27) als Gruppenstrahler mit schwenkbarem Einschallwinkel ($\beta_s$) und der Ultraschallempfänger (29) als Gruppenstrahler mit schwenkbarem Emp-

fangswinkel ($\beta_E$) ausgebildet ist, wobei insbesondere die Gruppenstrahler derart ansteuerbar sind, dass der Empfangswinkel ($\beta_E$) jeweils im Wesentlichen betragsgleich zum Einschallwinkel ($\beta_S$) ist.

22. Vorrichtung nach einem der Ansprüche 13 bis 21, **gekennzeichnet durch** eine Auswerteeinheit (37), mittels der ein Zeitintervall einstellbar ist, außerhalb dessen das Empfangssignal des Ultraschallempfän- , gers (29;41,43,45) unterdrückbar ist.

**Claims**

1. Method for detecting a flaw, in particular a crack (13, 14, 15, 16, 17), in a railway wheel (1), an ultrasonic wave (31) being generated on the running tread (3) of the railway wheel (1) by means of an ultrasonic transmitter (27; 39; 61, 63, 65) in the railway wheel (1), and an ultrasonic receiver (29; 41, 43, 45) spaced apart from the ultrasonic transmitter (27; 39; 61, 63, 65) by an azimuth angle ($\varphi$, $\varphi_1$, $\varphi_2$, $\varphi_3$) being used to detect the ultrasonic wave (31), **characterized**

    a) **in that** the ultrasonic wave (31) is injected obliquely with reference to the running tread (3) and is transmitted through the railway wheel (1) in a V-shaped fashion,
    b) **in that** the detected ultrasonic wave (31) is polarized transversely and the polarization direction is oriented parallel to a flat side of the railway wheel (1), and
    c) **in that** the ultrasonic wave (31) is detected at the flaw after deflection, in particular reflection.

2. Method according to Claim 1, **characterized in that** the ultrasonic transmitter (27; 39; 61, 63, 65) is moved relative to the railway wheel (1) in a circular fashion about the rotational axis (2) of the railway wheel (1).

3. Method according to Claim 2, **characterized in that** the ultrasonic receiver (29; 41, 43, 45) is moved in the same way as the ultrasonic transmitter (27; 39; 61, 63, 65).

4. Method according to one of Claims 1 to 3, **characterized in that** the detected ultrasonic wave (31) is generated by mode conversion given an incident longitudinal wave.

5. Method according to one of Claims 1 to 4, **characterized in that** the incidence angle ($\beta_s$, $\beta_{s,1}$, $\beta_{s,2}$) of the ultrasonic wave (31) in the railway wheel (1) has a value which is greater than 10°, in particular greater than 15°, and less than the transverse refraction angle, belonging to the first critical angle, of the material from which the railway wheel (1) is made.

6. Method according to Claim 5, **characterized in that** the incidence angle ($\beta_s$) is less than 33°.

7. Method according to one of Claims 1 to 6, **characterized in that** the received signal of the ultrasonic receiver (29; 41, 43, 45) is evaluated only within a time interval which includes the reception instant of the ultrasonic wave (31) which is to be expected for the azimuth angle ($\varphi$, $\varphi_1$, $\varphi_2$, $\varphi_3$) between the ultrasonic transmitter (27; 39; 61, 63, 65) and the ultrasonic receiver (29; 41, 43, 45) and for the incidence angle ($\beta$, $\beta_{s,1}$, $\beta_{s,2}$, $\beta_{s,3}$).

8. Method according to one of Claims 1 to 7, **characterized in that** the ultrasonic wave is detected by the ultrasonic receiver (29; 41, 43, 45) given a reception angle ($\beta_E$) of absolute value substantially equal to the incidence angle ($\beta_S$) of the ultrasonic wave.

9. Method according to Claim 8, **characterized in that** the incidence angle ($\beta_s$) and the reception angle ($\beta_E$) are set to have absolute values in each case substantially equal in relation to one another in order to test zones of different depth (t) in the railway wheel (1).

10. Method according to one of Claims 1 to 9, **characterized in that** in addition to the first transducer group (51) formed from the ultrasonic transmitter (39; 61) and the ultrasonic receiver (41), use is made for the purpose of testing zones of different depth (t; $t_1$, $t_2$, $t_3$) in the railway wheel (1) of at least a second transducer group (53) which is assigned at least one ultrasonic transducer (43, 45, 63, 65) which differs from the ultrasonic transmitter (39; 61) and the ultrasonic receiver (41).

11. Method according to Claim 10, **characterized**

    a) **in that** the azimuth angle ($\varphi$) between the ultrasonic receiver (43) and the ultrasonic transmitter (39) of the second transducer group (53) is equal to the corresponding azimuth angle ($\varphi$) of the first transducer group (51), and
    b) **in that** the incidence angle ($\beta_{s,2}$) of the second transducer group (53) differs from the incidence angle ($\beta_{s,1}$) of the first transducer group (51) (Figure 4).

12. Method according to Claim 10, **characterized**

    a) **in that** the incidence angle ($\beta_s$) and/or the reception angle ($\beta_E$) of the second transducer group (53) is equal to the corresponding angle

($\beta_s$) of the first transducer group (51), and

b) **in that** the azimuth angle ($\varphi_2$) between the ultrasonic receiver (43) and the ultrasonic transmitter (39) of the second transducer group (53) differs from the corresponding azimuth angle ($\varphi_1$) of the first transducer group (51) (Figure 3).

13. Device for detecting a flaw, in particular a crack, in a railway wheel (1) that can rotate about a rotational axis (2), having

a) a test head carrier (25) which carries an ultrasonic transmitter (27; 39; 61, 63, 65) for injecting an ultrasonic wave (31) through the running tread (3) into the railway wheel (1), and having

b) an ultrasonic receiver (29; 41, 43, 45), arranged on the test head carrier (25), for detecting the ultrasonic wave (31), which is spaced apart from the ultrasonic transmitter (27; 39; 61, 63, 65) by an azimuth angle ($\varphi$, $\varphi_1$, $\varphi_2$, $\varphi_3$), in particular for carrying out the method according to one of Claims 1 to 12, **characterized by** a drive device (21) for moving the ultrasonic transmitter (27; 39; 61, 63, 65) relative to the railway wheel (1) and about the rotation axis (2) in a circular fashion, and in that the ultrasonic transmitter is made for oblique injection, and in that the azimuth angle ($\varphi$, $\varphi_1$, $\varphi_2$, $\varphi_3$) is dimensioned in such a way that the railway wheel (1) can be transmitted through in a V-shaped fashion.

14. Device according to Claim 13, **characterized in that** the test head carrier (25) has a curved coupling surface (33) which can be applied to the running tread (3) of the railway wheel (1).

15. Device according to Claim 13 or 14, **characterized in that** the ultrasonic transmitter (27; 39; 61, 63, 65) and/or the ultrasonic receiver (29; 41, 43, 45) are made for an incidence angle ($\beta_s$) or a reception angle ($\beta_E$) in the railway wheel (1) the absolute value of which is greater than 10° and less than the transverse refraction angle, belonging to the first critical angle, of the material from which the railway wheel (1) is made.

16. Device according to one of Claims 13 to 15, **characterized in that** the ultrasonic transmitter (27; 39; 61, 63, 65) and/or the ultrasonic receiver (29; 41, 43, 45) are made for an incidence angle ($\beta_s$) or a reception angle ($\beta_E$) in the railway wheel (1) whose absolute value lies in the range from 10° to 35°, in particular in the range from 15° to 33°.

17. Device according to one of Claims 13 to 16, **characterized in that** the ultrasonic receiver (29; 41, 43, 45) is made for a reception angle ($\beta_E$) of absolute value substantially equal to the incidence angle ($\beta_s$) of the ultrasonic transmitter (27; 39; 61, 63, 65).

18. Device according to one of Claims 13 to 17, **characterized in that** in addition to the first transducer group (51) formed from the ultrasonic transmitter (39; 61) and the ultrasonic receiver (41), the test head carrier (25) has at least a second transducer group (53) which is assigned at least one ultrasonic transducer (43, 45, 63, 65) which differs from the ultrasonic transmitter (39; 61) and the ultrasonic receiver (41).

19. Device according to Claim 18, **characterized**

a) **in that** the azimuth angle ($\varphi$) between the ultrasonic receiver (43) and the ultrasonic transmitter (39) of the second transducer group (53) is equal to the corresponding azimuth angle ($\varphi$) of the first transducer group (51), and

b) **in that** the incidence angle ($\beta_{s,\,2}$) of the second transducer group (53) differs from the incidence angle ($\beta_{s,\,1}$) of the first transducer group (51) (Figure 4).

20. Device according to Claim 18, **characterized**

a) **in that** the incidence angle ($\beta_s$) and/or the reception angle ($\beta_E$) of the second transducer group (53) is equal to the corresponding angle ($\beta_s$) of the first transducer group (51), and

b) **in that** the azimuth angle ($\varphi_2$) between the ultrasonic receiver (43) and the ultrasonic transmitter (39) of the second transducer group (53) differs from the corresponding azimuth angle ($\varphi_1$) of the first transducer group (51) (Figure 3).

21. Device according to one of Claims 13 to 20, **characterized in that** the ultrasonic transmitter (27) is designed as a transducer array with a pivotable incidence angle ($\beta_s$), and the ultrasonic receiver (29) is designed as a transducer array with a pivotable reception angle ($\beta_E$), it being possible, in particular, for the transducer arrays to be driven in such a way that the reception angle ($\beta_E$) is in each case of absolute value substantially equal to the incidence angle ($\beta_s$).

22. Device according to one of Claims 13 to 21, **characterized by** an evaluation unit (37) by means of which it is possible to set a time interval outside which the reception signal of the ultrasonic receiver (29; 41, 43, 45) can be suppressed.

**Revendications**

1. Procédé de détection d'un défaut, notamment d'une fissure (13, 14, 15, 16, 17), dans une roue (1) ferroviaire, dans lequel on produit, sur la surface (3) de roulement de la roue (1) ferroviaire, une onde (31) ultrasonore au moyen d'un émetteur (27, 39, 61, 63, 65) d'ultrasons dans la roue (la) ferroviaire et pour la détection de l'onde (31) ultrasonore on utilise un récepteur (29, 41, 43, 45) d'ultrasons à distance de l'émetteur (27, 39, 61, 63, 65) d'ultrasons d'un angle ($\varphi$, $\varphi_1$, $\varphi_2$, $\varphi_3$) azimutal, **caractérisé**

a) **en ce que** l'on injecte l'onde (31) ultrasonore de manière inclinée par rapport à la surface (3) de roulement et on la fait traverser en forme de V la roue (1) ferroviaire,
b) **en ce que** l'on polarise transversalement l'onde (31) ultrasonore détectée et on oriente la direction de polarisation parallèlement à un côté plat de la roue (1) ferroviaire, et
c) **en ce que** l'on détecte l'onde (31) ultrasonore après déviation, notamment après réflexion sur le défaut.

2. Procédé suivant la revendication 1, **caractérisé en ce que** l'on déplace l'émetteur (27, 39, 61, 63, 65) d'ultrasons par rapport à la roue (1) ferroviaire circulairement autour de l'axe (2) de rotation de la roue (1) ferroviaire.

3. Procédé suivant la revendication 1, **caractérisé en ce que** l'on déplace le récepteur (29, 41, 43, 45) d'ultrasons de la même façon que l'émetteur (27, 39, 61, 63, 65) d'ultrasons.

4. Procédé suivant l'une des revendications 1 à 3, **caractérisé en ce que** l'on produit l'onde (31) ultrasonore orientée par conversion de mode pour une onde longitudinale incidente.

5. Procédé suivant l'une des revendications 1 à 4, **caractérisé en ce que** l'angle ($\beta_s$, $\beta_{s,1}$, $\beta_{s,2}$) de sonorisation de l'onde (31) ultrasonore dans la roue (1) ferroviaire a une valeur qui est plus grande que 10°, notamment plus grande que 15°, et plus petite que l'angle de réfraction transversale du matériau faisant partie du premier angle critique, matériau en lequel la roue (1) ferroviaire est fabriquée.

6. Procédé suivant la revendication 5, **caractérisé en ce que** l'angle ($\beta_s$) de sonorisation est plus petit que 33°.

7. Procédé suivant l'une des revendications 1 à 6, **caractérisé en ce que** l'on exploite le signal de réception du récepteur (29, 41, 43, 45) d'ultrasons seulement dans un intervalle de temps qui renferme l'instant de réception de l'onde (31) ultrasonore à laquelle on s'attend pour l'angle ($\varphi$, $\varphi_1$, $\varphi_2$, $\varphi_3$) azimutal compris entre l'émetteur (27, 39, 61, 63, 65) d'ultrasons et le récepteur (29, 41, 43, 45) d'ultrasons et pour l'angle ($\beta_s$, $\beta_{s,1}$, $\beta_{s,2}$) de sonorisation.

8. Procédé suivant l'une des revendications 1 à 7, **caractérisé en ce que** l'on détecte l'onde ultrasonore par le récepteur (29, 41, 43, 45) d'ultrasons pour un angle ($\beta_E$) de réception sensiblement de même valeur absolue que l'angle ($\beta_s$) de sonorisation de l'onde ultrasonore.

9. Procédé suivant la revendication 8, **caractérisé en ce que**, pour contrôler des zones de profondeur (t) différentes dans la roue (1) ferroviaire, on règle l'angle ($\beta_s$) de sonorisation et l'angle ($\beta_E$) de réception l'un après l'autre à des valeurs différentes respectivement sensiblement de même valeur absolue l'une par rapport à l'autre.

10. Procédé suivant l'une des revendications 1 à 9, **caractérisé en ce que,** pour contrôler des zones de profondeur (t, $t_1$, $t_2$, $t_3$) différentes de la roue (1) ferroviaire, on utilise, supplémentairement au premier groupe (51) de transducteurs formé de l'émetteur (27, 39, 61, 63, 65) d'ultrasons et du récepteur (29, 41, 43, 45) d'ultrasons, au moins un deuxième groupe (53) de transducteurs, auquel est associé au moins un transducteurs (43, 45, 63, 65) d'ultrasons qui est différent de l'émetteur (39, 61) d'ultrasons et du récepteur (41) d'ultrasons.

11. Procédé suivant la revendication 10, **caractérisé**

a) **en ce que** l'angle ($\varphi$) azimutal entre le récepteur (43) d'ultrasons et l'émetteur (39) d'ultrasons du deuxième groupe (53) de transducteurs est égal à l'angle ($\varphi$) azimutal correspondant du premier groupe (51) de transducteurs, et
b) **en ce que** l'angle ($\beta_{s,2}$) de sonorisation du deuxième groupe (53) de transducteurs est différent de l'angle ($\beta_{s,1}$) de sonorisation du premier groupe (51) de transducteurs.

12. Procédé suivant la revendication 1, **caractérisé**

a) **en ce que** l'angle ($\beta_s$) de sonorisation et/ou l'angle ($\beta_E$) de réception du deuxième groupe (53) de transducteurs est égal à l'angle ($\beta_s$) correspondant du premier groupe (51) de transducteurs, et
b) **en ce que** l'angle ($\varphi_2$) azimutal entre le récepteur d'ultrasons et l'émetteur (39) d'ultrasons du deuxième groupe (53) de transducteurs est différent de l'angle ($\varphi_2$) azimutal correspondant du premier groupe (51) de transducteurs.

**13.** Dispositif de détection d'un défaut, notamment d'une fissure, dans une roue (1) ferroviaire pouvant tourner autour d'un axe (2) de rotation, comprenant :

a) un porte-tête (25) de contrôle qui porte un émetteur (27, 39, 61, 63, 65) d'ultrasons pour sonoriser une onde (31) ultrasonore à travers la surface (3) de roulement de la roue (1) ferroviaire, et comprenant

b) un récepteur (29, 41, 43, 45) d'ultrasons disposé sur le porte-tête (25) de contrôle pour la détection de l'onde (31) ultrasonore, qui est à distance de l'émetteur (27, 39, 61, 63, 65) d'ultrasons d'un angle ($\varphi$, $\varphi_1$, $\varphi_2$, $\varphi_3$) azimutal, notamment pour effectuer le procédé suivant l'une des revendications 1 à 12,

**caractérisé par**

un dispositif (21) d'entraînement pour déplacer l'émetteur (27, 39, 61, 63, 65) d'ultrasons par rapport à la roue (1) ferroviaire et circulairement autour de l'axe (2) de rotation et par le fait que l'émetteur d'ultrasons est dirigé pour la sonorisation inclinée et en ce que l'angle ($\varphi$, $\varphi_1$, $\varphi_2$, $\varphi_3$) azimutal est tel que la roue (1) ferroviaire peut être sonorisée en forme de V.

**14.** Dispositif suivant la revendication 13, **caractérisé en ce que** le porte-tête (25) de contrôle a une surface (33) de couplage inclinée pouvant être appliquée à la surface (3) de roulement de la roue (1) ferroviaire.

**15.** Dispositif suivant la revendication 13 ou 14, **caractérisé en ce que** l'émetteur (27, 39, 61, 63, 65) d'ultrasons et/ou le récepteur (29, 41, 43, 45) d'ultrasons sont dirigés pour un angle ($\beta_s$) de sonorisation ou un angle ($\beta_E$) de réception dans la roue (1) ferroviaire dont la valeur absolue est plus grande que 10° et plus petite que l'angle de réfraction transversale du matériau, faisant partie du premier angle critique, matériau dans lequel la roue (1) ferroviaire est fabriquée.

**16.** Dispositif suivant l'une des revendications 13 à 15, **caractérisé en ce que** l'émetteur (27, 39, 61, 63, 65) d'ultrasons et/ou le récepteur (29, 41, 43, 45) d'ultrasons sont dirigés pour un angle ($\beta_s$) de sonorisation ou un angle ($\beta_E$) de réception dans la roue (1) ferroviaire dont la valeur absolue est comprise entre 10° et 35°, notamment entre 15° et 23°.

**17.** Dispositif suivant l'une des revendications 13 à 16, **caractérisé en ce que** le récepteur (29, 41, 43, 45) d'ultrasons est dirigé pour un angle ($\beta_E$) de réception sensiblement de même valeur absolue que à l'angle ($\beta_s$) de sonorisation de l'émetteur (27, 39, 61, 63, 65) d'ultrasons.

**18.** Dispositif suivant l'une des revendications 13 à 17, **caractérisé en ce que** le porte-tête (25) de contrôle a, en plus du premier groupe (51) de transducteurs formé de l'émetteur (39, 61) d'ultrasons et du récepteur (41) d'ultrasons, au moins un deuxième groupe (53) de transducteurs, auquel est associé au moins un transducteur (43, 45, 63, 65) d'ultrasons qui est différent de l'émetteur (39, 61) d'ultrasons et du récepteur (41) d'ultrasons.

**19.** Dispositif suivant la revendication 18, **caractérisé**

a) **en ce que** l'angle ($\varphi$) azimutal entre le récepteur (43) d'ultrasons et l'émetteur (39) d'ultrasons du deuxième groupe (53) de transducteurs est égal à l'angle ($\varphi$) azimutal correspondant du premier groupe (51) de transducteurs, et

b) **en ce que** l'angle ($\beta_{s,2}$) de sonorisation du deuxième groupe (53) de transducteurs est différent de l'angle ($\beta_{s,1}$) de sonorisation du premier groupe (51) de transducteurs.

**20.** Dispositif suivant la revendication 18, **caractérisé**

a) **en ce que** l'angle ($\beta_s$) de sonorisation et/ou l'angle ($\beta_E$) de réception du deuxième groupe (53) de transducteurs est égal à l'angle ($\beta_s$) correspondant du premier groupe (51) de transducteurs, et

b) **en ce que** l'angle ($\varphi_2$) azimutal entre le récepteur d'ultrasons et l'émetteur (39) d'ultrasons du deuxième groupe (53) de transducteurs est différent de l'angle ($\varphi_2$) azimutal correspondant du premier groupe (51) de transducteurs.

**21.** Dispositif suivant l'une des revendications 13 à 20, **caractérisé en ce que** l'émetteur (27) d'ultrasons est formé en tant que radiateur de groupe à angle ($\beta_s$) de sonorisation pivotant et le récepteur (29) d'ultrasons en tant que radiateur de groupe à angle ($\beta_E$) de réception pivotant, les radiateurs de groupe pouvant être notamment commandés de façon à ce que l'angle ($\beta_E$) de réception soit respectivement sensiblement de même valeur absolue que l'angle ($\beta_s$) de sonorisation.

**22.** Dispositif suivant l'une des revendications 13 à 21, **caractérisé par** une unité (37) d'exploitation, au moyen de laquelle un intervalle de temps peut être réglé à l'extérieur duquel le signal de réception du récepteur (29, 41, 43, 45) d'ultrasons peut être supprimé.

FIG 1

**FIG 2**

FIG 3

FIG 4

**FIG 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0704700 A1
- AT 291632
- WO 9013814 A